# EUROPÄISCHE PATENTANMELDUNG

(11) **EP 4 553 404 A1**
(43) Veröffentlichungstag der Anmeldung: **14.05.2025**
(21) Anmeldenummer: 24211359.5
(22) Anmeldetag: 07.11.2024
(51) Int. Cl.: F24S 25/30, F24S 25/61, F24S 25/613, F24S 25/70, H02S 20/23

(54) **DACHHAKEN**

(30) Priorität: 13.11.2023 DE 102023131545
(71) Anmelder: SL Rack GmbH, 83527 Haag (DE)
(72) Erfinder: Schletter, Ludwig, 83527 Haag i. OB (DE); Hurmer, Richard, 94562 Oberpöring (DE); Bauer, Georg, 83527 Haag i. OB (DE); Achatz, Florian, 94259 Kirchberg i.W. (DE)
(74) Vertreter: Lichtnecker, Markus Christoph

(57) **Zusammenfassung**

Die Erfindung betrifft einen Dachhaken zur Befestigung einer Montageeinheit (10) an einer Dachkonstruktion (12) und/oder an einem Dachelement (46), aufweisend einen Grundträger (14) zur Befestigung des Dachhakens an der Dachkonstruktion (12) und/oder dem Dachelement (46), und einen Träger (32) mit einem Montageabschnitt (34) zur Befestigung der Montageeinheit (10) am Dachhaken.

## Beschreibung

Die Erfindung betrifft einen Dachhaken zur Befestigung einer Montageeinheit, vorzugsweise Montageschiene, an einer Dachkonstruktion und/oder an einem Dachelement, aufweisend einen Grundträger zur Befestigung des Dachhakens an der Dachkonstruktion und/oder an dem Dachelement und einen Träger, vorzugsweise Schienenträger, mit einem Montageabschnitt zur Befestigung der Montageeinheit am Dachhaken.

Dachhaken sind grundsätzlich bekannt. Diese werden beispielsweise zur Montage von Solarpaneelen und/oder Photovoltaik-Modulen eingesetzt. Die Solarpaneele und/oder Photovoltaik-Module werden z.B. an den Montageschienen, welche auch Tragschienen genannt werden, montiert.

Die Dachhaken werden am Grundträger z.B. an Dachkonstruktionen, beispielsweise an Unterkonstruktionen von Schrägdächern, befestigt.

Nachteilig bei bisherigen Dachhaken ist, dass die gesamte Traglast vom Grundträger aufgenommen wird. Dies kann die Statik, gerade wenn der Dachhaken gebogen ist, negativ beeinflussen.

Es ist daher eine Aufgabe der Erfindung, einen Dachhaken sowie ein Verfahren zum Befestigen des Dachhakens zu schaffen, bei dem die statischen Eigenschaften verbessert sind.

Die Lösung dieser Aufgabe erfolgt durch die Vorrichtung bzw. das Verfahren der unabhängigen Ansprüche.

Erfindungsgemäß ist der Dachhaken zur Befestigung einer Montageeinheit an einer Dachkonstruktion und/oder an einem Dachelement ausgebildet und/oder kann hierzu verwendet werden.

Bei der Montageeinheit kann es sich beispielsweise um eine Montageschiene und/oder ein Auflageelement handeln.

Bei der Dachkonstruktion, beispielsweise Dachunterkonstruktion, kann es sich beispielsweise um Balken und/oder Sparren handeln.

Bei dem Dachelement kann es sich z.B. um einen Dachziegel, einen Dachstein, eine Dachschindel und/oder ein Blech handeln.

An der Montageschiene, welche auch Tragschiene genannt wird, kann beispielsweise ein Solarpaneel und/oder Photovoltaik-Modul montiert werden.

Der Dachhaken weist einen Grundträger zur Befestigung des Dachhakens an der Dachkonstruktion und/oder am Dachelement auf.

Dazu kann ein Grundträger des Dachhakens z.B. eine plattenförmige Basis mit Plattenaussparungen umfassen. An den Plattenaussparungen kann die Basis beispielsweise mittels Schrauben und/oder Bolzen an der Dachkonstruktion befestigt, z.B. verschraubt, werden.

Der Dachhaken weist einen Träger, vorzugsweise Schienenträger, mit einem Montageabschnitt zur Befestigung der Montageeinheit am Dachhaken auf.

Beispielsweise kann der Dachhaken als Profil ausgebildet sein. Das Profil kann zum Beispiel eine rechteckige Querschnittsfläche aufweisen.

Vorzugsweise weist der Dachhaken ein Metallmaterial, z.B. ein Aluminiummaterial, auf oder besteht daraus.

Der Träger ist an einem Fixierabschnitt höhenverstellbar mit dem Grundträger verbindbar oder verbunden.

Wird z.B. eine Montageeinheit an mehreren Dachhaken montiert, müssen dabei auftretende Unebenheiten der Dachkonstruktion und/oder der Dachelemente ausgeglichen werden.

Durch die Höhenverstellbarkeit kann insbesondere der Abstand zwischen der Montageeinheit und der Dachkonstruktion und/oder dem Dachelement eingestellt werden.

Der Träger kann relativ zum Grundträger beweglich sein.

Beispielsweise kann der Fixierabschnitt und/oder der Grundträger ein Langloch aufweisen. Vorzugsweise mittels einer Schraube kann eine Fixierung an der gewünschten Position erfolgen. Hierzu kann der Grundträger und/oder der Fixierabschnitt eine Schraubenaufnahme, z.B. eine Aussparung mit einem Gewinde, aufweisen.

Bevorzugt wird die Höhe derart eingestellt, dass sich der Träger am Dachelement abstützt.

Vorzugsweise kann der Träger, z.B. der Fixierabschnitt, in eine Richtung geneigt sein. Auf diese Weise ist eine optimale Anpassung an das Dachelement möglich. Beschädigungen des Dachelements, z.B. ein Ziegelbruch, können dadurch vermieden werden.

Der Träger weist eine Auflage zum Aufliegen auf dem Dachelement auf.

Über die Auflage kann bei entsprechender Höheneinstellung beispielsweise ein Druck auf das Dachelement erzeugt werden. Einerseits wird auf diese Weise ein sicherer Halt des Dachelements gewährleistet. Andererseits werden dadurch, dass sich der Dachhaken im Bereich des Trägers auf dem Dachelement abstützt, die Traglasten verteilt und die statischen Eigenschaften insgesamt verbessert.

Weiterbildungen der Erfindung sind auch den abhängigen Ansprüchen, der Beschreibung sowie den beigefügten Zeichnungen zu entnehmen.

Gemäß einer Ausführungsform weist der Grundträger einen Bügel und einen Haken auf, die miteinander verbindbar oder verbunden sind.

Der Grundträger ist somit wenigstens zweiteilig ausgebildet.

Vorzugsweise sind der Bügel und der Haken zumindest abschnittsweise parallel zueinander orientiert.

Beispielsweise kann das Dachelement zwischen dem Bügel und dem Haken aufgenommen werden. Der Grundträger umgreift hierbei zumindest einen Abschnitt des Dachelements.

Vorzugsweise kann der Haken L-förmig ausgebildet sein. Der Haken kann eine Basis und einen sich zumindest abschnittsweise senkrecht zur Basis erstreckenden Befestigungsbereich aufweisen. Die Basis kann hierbei bevorzugt als eine Platte mit Plattenaussparungen ausgebildet sein. An den Plattenaussparungen kann die Basis beispielsweise mittels Schrauben und/oder Bolzen an der Dachkonstruktion befestigt, z.B. verschraubt, werden.

Beispielsweise weist der Haken auf einer dem Bügel zugewandten Seite eine Riffelung oder mehrere Riffelungen auf. Dies ermöglicht einen guten Halt an der Unterseite des Dachelements.

Der Bügel und der Haken sind vorzugsweise über eine Steck- und/oder Schraubverbindung miteinander verbindbar oder verbunden. Dadurch wird ein sicherer Halt gewährleistet.

Bevorzugt sind der Bügel und der Haken höhenverstellbar miteinander verbindbar oder verbunden. Auf diese Weise kann eine Anpassung an unterschiedlich dicke Dachelemente erfolgen.

Der maximale Verstellbereich, also der maximale Abstand zwischen dem Bügel und dem Haken, insbesondere einer Basis des Hakens, kann zwischen 2 cm und 10 cm, vorzugsweise zwischen 3 cm und 7 cm, z.B. zwischen 3,6 cm und 6,1 cm, betragen.

Beispielsweise ist der Träger mit dem Bügel höhenverstellbar verbindbar oder verbunden. Der Bügel kann somit an einer Seite mit dem Fixierabschnitt des Trägers und an der anderen Seite mit dem Haken verbunden sein bzw. verbunden werden.

Alternativ zu einer zweiteiligen Ausgestaltung des Grundträgers ist auch ein einteiliger Grundträger denkbar.

Nach einer weiteren Ausführungsform ist eine Schraube zum Fixieren des Trägers am Grundträger vorgesehen.

Die Schraube kann beispielsweise in ein Langloch eingreifen und in einer Schraubenaufnahme verschraubt werden.

Beispielsweise kann ein dem Fixierabschnitt zugewandter Fixierbereich des Grundträgers parallel zum Fixierabschnitt orientiert sein.

Vorzugsweise kann der Fixierabschnitt und/oder der Fixierbereich eine Riffelung oder mehrere Riffellungen aufweisen. Dadurch kann der Halt verbessert werden.

Gemäß einer weiteren Ausführungsform schließen der Fixierabschnitt und der Montageabschnitt einen Winkel zwischen 100° und 180°, vorzugsweise zwischen 120° und 170°, ein.

Bevorzugt kann der Winkel zwischen 155 ° und 160° betragen.

Der Fixierabschnitt kann beispielsweise gegenüber dem Montageabschnitt abgewinkelt sein. Der Winkel kann z.B. gleich oder kleiner als 180° sein.

Nach einer weiteren Ausführungsform schließen der Fixierabschnitt und die Auflage einen Winkel zwischen 20° und 160°, vorzugsweise zwischen 50° und 130°, ein.

Bevorzugt kann der Winkel zwischen 65° und 70° betragen.

Die Auflage kann beispielsweise gegenüber dem Fixierabschnitt abgewinkelt sein. Der Winkel kann z.B. gleich oder kleiner als 90° sein.

Beispielsweise kann die Auflage senkrecht zum Montageabschnitt orientiert sein.

Gemäß einer weiteren Ausführungsform erstreckt sich der Fixierabschnitt mittig von der Auflage aus.

Der Druck auf das Dachelement kann somit gleichmäßig verteilt werden.

Nach einer weiteren Ausführungsform ist die Auflage rechteckförmig.

Durch die vergleichsweise große Auflagefläche kann der Druck auf das Dachelement gleichmäßig verteilt werden.

Gemäß einer weiteren Ausführungsform weist die Auflage ein reibungserhöhtes Material und/oder eine reibungserhöhte Struktur auf.

Dadurch wird ein sicherer Halt auf dem Dachelement gewährleistet.

Bei dem reibungserhöhten Material kann es sich beispielsweise um ein Gummimaterial handeln.

Die reibungserhöhte Struktur kann z.B. eine Riffelung oder mehrere Riffelungen aufweisen oder daraus bestehen.

Nach einer weiteren Ausführungsform weist die Auflage einen Auflagekörper und eine Gummiunterlage als reibungserhöhtes Material auf.

Die Auflage ist vorzugsweise wenigstens oder genau zweiteilig.

Die Gummiunterlage ist zumindest abschnittsweise an der Unterseite des Auflagekörpers angeordnet.

Die Unterseite der Auflage wird somit durch das reibungserhöhte Material, welches vorzugsweise Riffelungen aufweist, gebildet.

Die Gummiunterlage kann vorzugsweise werkzeuglos am Auflagekörper befestigt werden. Beispielsweise kann diese auf den Auflagekörper aufgesteckt werden. Dazu kann die Gummiunterlage den Auflagekörper seitlich umgreifen.

Beispielweise kann die Gummiunterlage einen U-förmigen Querschnitt aufweisen.

Die Erfindung betrifft auch ein Befestigungsverfahren, also ein Verfahren zum Befestigen eines erfindungsgemäßen Dachhakens an einer Dachkonstruktion und/oder an einem Dachelement.

Dabei wird der Grundträger an der Dachkonstruktion und/oder an dem Dachelement montiert, beispielsweise verschraubt.

Optional kann die Höhe zwischen dem Bügel und dem Haken eingestellt werden. Diese Bauteile können in der gewünschten Position, z.B. mittels einer Schraube, fixiert werden.

Die Höhe des Trägers wird derart relativ zum Grundträger eingestellt, dass die Auflage auf dem Dachelement aufliegt.

Die Auflage übt einen Druck auf das Dachelement aus und/oder trägt jedenfalls einen Teil der Last.

Alle hier beschriebenen Ausführungsformen und Bauteile der Vorrichtung sind vorzugsweise dazu ausgebildet, nach dem hier beschriebenen Verfahren befestigt zu werden. Ferner können alle hier beschriebenen Ausführungsformen der Vorrichtung sowie alle hier beschriebenen Ausführungsformen des Verfahrens jeweils miteinander kombiniert werden, vorzugsweise auch losgelöst von der konkreten Ausgestaltung, in deren Zusammenhang sie erwähnt werden.

Die Erfindung wird im Folgenden beispielhaft unter Bezugnahme auf die Zeichnungen beschrieben. Es zeigen:
- Fig. 1: eine Seitenansicht einer Ausführungsform eines erfindungsgemäßen Dachhakens,
- Fig. 2: eine Vorderansicht des Dachhakens gemäß Fig. 1 ohne Dachelement und Montageeinheit,
- Fig. 3: eine Perspektivansicht des Dachhakens gemäß Fig. 1 ohne Dachelement und Montageeinheit,
- Fig. 4: eine Perspektivansicht einer weiteren Ausführungsform eines erfindungsgemäßen Dachhakens mit verstellter Klemmvorrichtung,
- Fig. 5: eine Draufsicht einer Ausführungsform einer Klemmvorrichtung eines erfindungsgemäßen Dachhakens,
- Fig. 6: eine Schnittansicht gemäß A-A in Fig. 5, und
- Fig. 7: eine Seitenansicht einer weiteren Ausführungsform eines erfindungsgemäßen Dachhakens.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

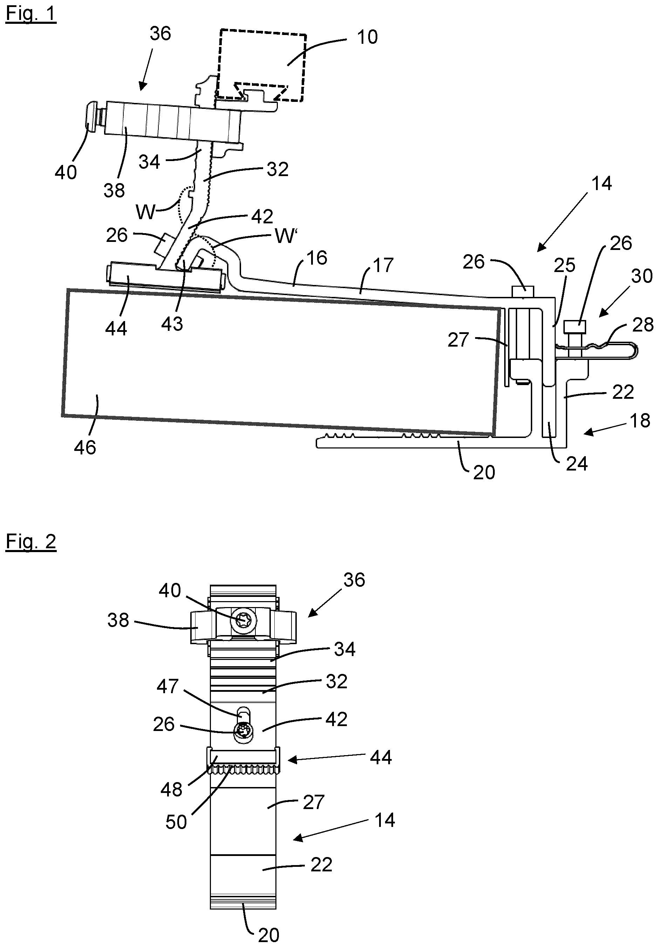

Fig. 1 zeigt einen Dachhaken zur Befestigung einer gestrichelt dargestellten Montageeinheit 10, vorzugsweise Montageschiene, an einem Dachelement 46.

Der Dachhaken weist einen Grundträger 14 mit einem Bügel 16 und einem Haken 18 zur Befestigung des Dachhakens am Dachelement 46 auf.

Der Bügel 16 ist höhenverstellbar mit dem Haken 18 verbunden.

Der Haken 18 weist eine plattenförmige Basis 20 sowie einen sich senkrecht von der Basis 20 aus erstreckenden Befestigungsbereich 22 auf. Der Befestigungsbereich 22 hat einen Schlitz 24 zur Aufnahme des Bügels 16.

Der Bügel 16 weist einen im Wesentlichen parallel zur Basis 20 orientierten Bügelkörper 17 sowie einen rechtwinklig dazu abgewinkelten Bügelabschnitt 25 auf. Der abgewinkelte Bügelabschnitt 25 wird in den Schlitz 24 gesteckt.

Die Fixierung kann schließlich über eine Schraube 26 erfolgen.

Eine Abstützvorrichtung 27 des Bügels 16 stützt den Bügel 16 ab und verhindert ein Verkippen.

Der Befestigungsbereich 22 kann an gegenüberliegenden Seiten des Schlitzes 24 jeweils eine Aussparung für eine Schraube 26 aufweisen. An einer Aussparung, welche beispielsweise ein Gewinde aufweisen kann, kann hierbei die Schraube 26 zum Fixieren des Bügels 16 befestigt werden. An der anderen Aussparung, welche beispielsweise ein Gewinde aufweisen kann, kann optional eine Klemme 28 einer Erdungsvorrichtung 30 über eine Schraube 26 befestigt werden.

Der Dachhaken weist einen Träger, vorzugsweise Schienenträger 32, mit einem Montageabschnitt 34 zur Befestigung der Montageeinheit 10 am Dachhaken auf.

Die Montageeinheit 10 kann beispielsweise über eine Klemmvorrichtung 36 am Montageabschnitt 34 des Trägers 32 festgeklemmt werden.

Die Klemmvorrichtung 36 weist einen Klemmkörper 38 sowie eine als Schraube 40 ausgebildetes Klemmelement auf.

Der Träger 32 ist an einem Fixierabschnitt 42 höhenverstellbar mit einem Fixierbereich 43 des Grundträgers 14 verbunden. Zum Fixieren kann hierbei eine Schraube 26 eingesetzt werden.

Der Fixierabschnitt 42 ist gegenüber dem Montageabschnitt 34 vorzugsweise abgewinkelt, z.B. um einen Winkel W von 157°.

Der Träger 32 weist eine Auflage 44 zum Aufliegen auf dem Dachelement 46 auf.

Der Fixierabschnitt 42 kann sich unter einem Winkel W' von z.B. 65° mittig von der Auflage 44 aus erstrecken.

Wie in Fig. 2 zu sehen ist, weist der Fixierabschnitt 42 ein Langloch 47 auf, in das die Schraube 26 eingreifen kann.

Ferner ist ersichtlich, dass die Auflage 44 einen Auflagekörper 48 sowie eine Gummiunterlage 50 aufweist. Die Gummiunterlage 50 kann an ihrer Unterseite eine Riffelung aufweisen.

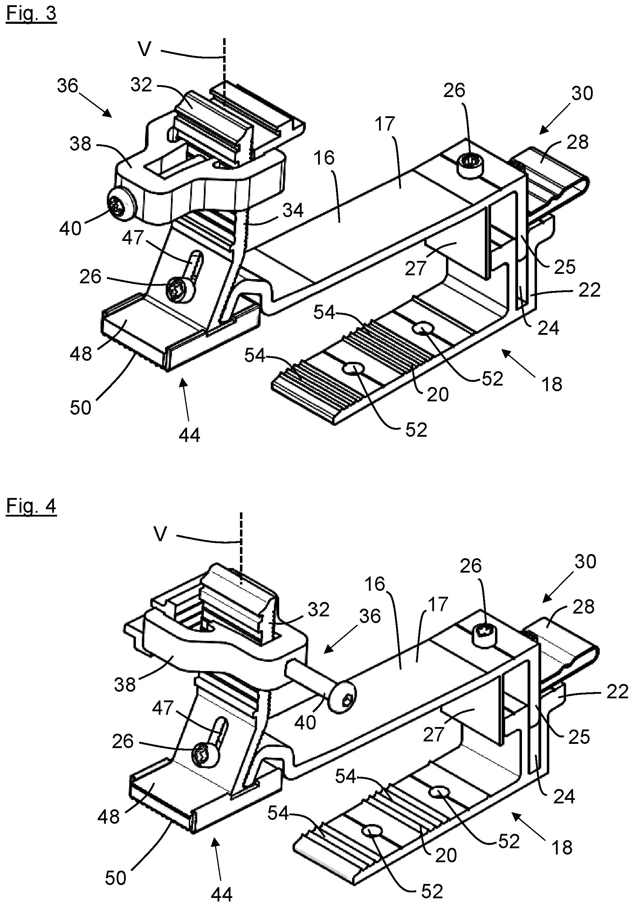

In Fig. 3 ist dargestellt, dass die plattenförmige Basis 20 Plattenaussparungen 52 aufweisen kann. An den Plattenaussparungen 52 kann die Basis 20 beispielsweise mittels Schrauben und/oder Bolzen an einer Dachkonstruktion 12 befestigt, z.B. verschraubt, werden.

Die plattenförmige Basis 20 weist auf einer dem Bügel 16 zugewandten Seite mehrere Riffelungen 54 auf. Diese ermöglichen einen guten Halt an der Unterseite des Dachelements 46.

Die Klemmvorrichtung 36 mit dem Klemmkörper 38 und dem als Schraube 40 ausgebildeten Klemmelement ist in einer ersten Position zur horizontalen Anbringung der Montageeinheit 10 am Montageabschnitt 34 befestigt.

In Fig. 4 ist die Klemmvorrichtung 36 in einer um 90° (bezüglich einer vertikalen Achse V) gegenüber der ersten Position versetzten zweiten Position zur geneigten Anbringung der Montageeinheit 10 am Montageabschnitt 34 befestigt.

Geneigt bedeutet hierbei eine Richtung parallel bzw. entlang der Dachneigung, z.B. in Richtung des Dachfirsts. Die geneigte Anbringung erfolgt vorzugsweise rechtwinklig zur horizontalen Anbringung.

Das Dach kann entweder lediglich mit horizontalen oder lediglich mit geneigten Montageeinheiten versehen werden. Alternativ ist eine Kombination aus horizontalen und geneigten Montageeinheiten als so genannter Kreuzverbund möglich.

Die Klemmvorrichtung 36 kann auch in der zweiten Position um 180° (bezüglich einer horizontalen Ebene) gedreht sein.

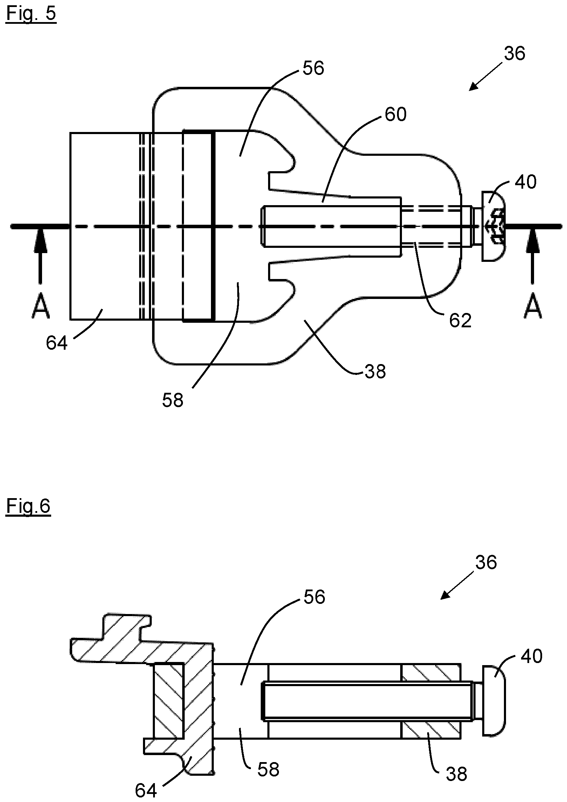

Wie in Fig. 5 zu sehen ist, weist die Klemmvorrichtung 36 einen Klemmkörper 38 auf, der eine Aussparung 56 zum Aufnehmen des Montageabschnitts 34 vollumfänglich umschließt.

Die Aussparung 56 weist einen ersten Aufnahmeschlitz 58 und einen um 90° gegenüber dem ersten Aufnahmeschlitz 58 versetzten zweiten Aufnahmeschlitz 60 auf.

Der erste Aufnahmeschlitz 58 und der zweite Aufnahmeschlitz 60 sind miteinander verbunden.

Der zweite Aufnahmeschlitz 60 erstreckt sich mittig vom ersten Aufnahmeschlitz 58 aus.

Der Klemmkörper 38 weist eine Klemmelementaussparung 62 für das Klemmelement 40 auf, welche in den zweiten Aufnahmeschlitz 60 mündet.

Das Klemmelement 40 ist mindestens so lang wie die Differenz aus der Längserstreckung des zweiten Aufnahmeschlitzes 60 samt Klemmelementaussparung 62 und der Stärke des (in Fig. 5 nicht dargestellten) Montageabschnitts 34.

Auch ist das Klemmelement 40 länger als die Längserstreckung des ersten Aufnahmeschlitzes 58 bzw. als die Längserstreckung des zweiten Aufnahmeschlitzes 60.

In Fig. 6 ist eine Schnittansicht der Klemmvorrichtung 36 dargestellt.

Eine Haltestruktur 64 der Klemmvorrichtung 36 kann mit dem Klemmkörper 38 fest, vorzugsweise unlösbar, verbunden sein. Alternativ kann die Haltestruktur 64 als separates Bauteil ausgebildet sein.

In der zweiten Position kann die Klemmvorrichtung 36 um 180° (bezüglich einer horizontalen Ebene) gedreht sein. Dadurch ändert sich auch die Orientierung der Haltestruktur 64. Vorzugsweise ist die Orientierung der Haltestruktur 64 in der ersten Position und der zweiten Position jedoch gleich.

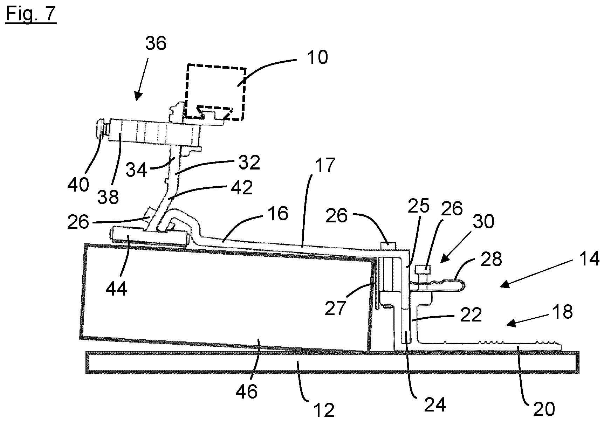

Fig. 7 zeigt einen Dachhaken zur Befestigung einer Montageeinheit 10 an einer Dachkonstruktion 12.

Der Haken 18 ist gegenüber Fig. 1 um 180° versetzt und an der Basis 20 mit der Dachkonstruktion 12 verschraubt.

### Bezugszeichenliste

- 10: Montageeinheit, Montageschiene
- 12: Dachkonstruktion
- 14: Grundträger
- 16: Bügel
- 17: Bügelkörper
- 18: Haken
- 20: Basis
- 22: Befestigungsbereich
- 24: Schlitz
- 25: Bügelabschnitt
- 26: Schraube
- 27: Abstützvorrichtung
- 28: Klemme
- 30: Erdungsvorrichtung
- 32: Träger, Schienenträger
- 34: Montageabschnitt
- 36: Klemmvorrichtung
- 38: Klemmkörper
- 40: Schraube, Klemmelement
- 42: Fixierabschnitt
- 43: Fixierbereich
- 44: Auflage
- 46: Dachelement
- 47: Langloch
- 48: Auflagekörper
- 50: Gummiunterlage
- 52: Plattenaussparung
- 54: Riffelung
- 56: Aussparung
- 58: erster Aufnahmeschlitz
- 60: zweiter Aufnahmeschlitz
- 62: Klemmelementaussparung
- 64: Haltestruktur

- V: vertikale Achse
- W, W': Winkel

## Patentansprüche

1. Dachhaken zur Befestigung einer Montageeinheit (10), vorzugsweise Montageschiene, an einer Dachkonstruktion (12) und/oder an einem Dachelement (46), aufweisend
einen Grundträger (14) zur Befestigung des Dachhakens an der Dachkonstruktion (12) und/oder dem Dachelement (46), und
einen Träger (32), vorzugsweise Schienenträger, mit einem Montageabschnitt (34) zur Befestigung der Montageeinheit (10) am Dachhaken, wobei der Träger (32) an einem Fixierabschnitt (42) höhenverstellbar mit dem Grundträger (14) verbindbar oder verbunden ist und wobei der Träger (32) eine Auflage (44) zum Aufliegen auf dem Dachelement (46) aufweist.

2. Dachhaken nach Anspruch 1,
**dadurch gekennzeichnet,**
**dass** der Grundträger (14) einen Bügel (16) und einen Haken (18) aufweist, die, vorzugsweise höhenverstellbar, miteinander verbindbar oder verbunden sind.

3. Dachhaken nach Anspruch 1 oder 2,
**dadurch gekennzeichnet,**
**dass** eine Schraube (26) zum Fixieren des Trägers (32) am Grundträger (14) vorgesehen ist.

4. Dachhaken nach einem der vorhergehenden Ansprüche,
**dadurch gekennzeichnet,**
**dass** der Fixierabschnitt (42) und der Montageabschnitt (34) einen Winkel (W) zwischen 100° und 180°, vorzugsweise zwischen 120° und 170°, einschließen.

5. Dachhaken nach einem der vorhergehenden Ansprüche,
**dadurch gekennzeichnet,**
**dass** der Fixierabschnitt (42) und die Auflage (44) einen Winkel (W') zwischen 20° und 160°, vorzugsweise zwischen 50° und 130°, einschließen.

6. Dachhaken nach einem der vorhergehenden Ansprüche,
**dadurch gekennzeichnet,**
**dass** sich der Fixierabschnitt (42) mittig von der Auflage (44) aus erstreckt.

7. Dachhaken nach einem der vorhergehenden Ansprüche,
**dadurch gekennzeichnet,**
**dass** die Auflage (44) rechteckförmig ist.

8. Dachhaken nach einem der vorhergehenden Ansprüche,
**dadurch gekennzeichnet,**
**dass** die Auflage (44) ein reibungserhöhtes Material und/oder eine reibungserhöhte Struktur aufweist.

9. Dachhaken nach Anspruch 8,
**dadurch gekennzeichnet,**
**dass** die Auflage (44) einen Auflagekörper (48) und eine Gummiunterlage (50) als reibungserhöhtes Material aufweist, wobei die Gummiunterlage (50) zumindest abschnittsweise an der Unterseite des Auflagekörpers (48) angeordnet ist.

10. Befestigungsverfahren eines Dachhakens nach einem der vorhergehenden Ansprüche an einer Dachkonstruktion (12) und/oder an einem Dachelement (46), bei dem
der Grundträger (14) an der Dachkonstruktion (12) und/oder dem Dachelement (46) montiert wird und
die Höhe des Trägers (32) derart relativ zum Grundträger (14) eingestellt wird, dass die Auflage (44) auf dem Dachelement (46) aufliegt.
